# FASCICULE DE BREVET EUROPEEN

(11) **EP 3 367 754 B1**
(45) Date de publication et mention de la délivrance du brevet: **08.04.2020**
(21) Numéro de dépôt: 18155857.8
(22) Date de dépôt: 08.02.2018
(51) Int. Cl.: H05B 33/08

(54) **PROCÉDÉ ET MODULE DE COMMANDE POUR SOURCES LUMINEUSES À FLUX LUMINEUX PULSÉ D'UN VÉHICULE AUTOMOBILE**
STEUERVERFAHREN UND -MODUL FÜR LEUCHTQUELLEN MIT PULSIERENDEM LICHTSTROM EINES KRAFTFAHRZEUGS
METHOD AND CONTROL MODULE FOR PULSED LIGHT FLOW LIGHT SOURCES OF A MOTOR VEHICLE

(30) Priorité: 23.02.2017 FR 1751408
(43) Date de publication de la demande: 29.08.2018
(73) Titulaire: Valeo Vision, 93012 Bobigny Cedex (FR)
(72) Inventeur: HUE, David, 93012 BOBIGNY Cedex (FR); JEAN FRANCOIS, Laurent, 93012 BOBIGNY (FR); SAKLY, Mourad, 93012 BOBIGNY (FR)
(74) Mandataire: Valeo Vision

(56) Documents cités:
- EP-A1- 2 418 918
- AT-A1- 517 324
- FR-A1- 3 010 937
- US-A1- 2015 223 299

## Description

L'invention a trait aux systèmes d'éclairage pour véhicules automobiles. En particulier, elle se rapporte aux procédés et modules de commandes de sources lumineuses à alimentation électrique pulsée
Il devient de plus en plus courant d'utiliser des sources lumineuses à élément semi-conducteur, telles que des diodes électroluminescentes, LEDs, pour réaliser différentes fonctions lumineuses d'un véhicule. Ces fonctions peuvent par exemple inclure les feux diurnes, les feux de position, les indicateurs de direction ou les feux de croisement. De manière connue, un dispositif de pilotage de l'alimentation électrique est nécessaire pour alimenter un groupe de LEDs réalisant une fonction lumineuse donnée. Un tel dispositif de pilotage comprend en général un convertisseur de tension qui, à partir d'une tension continue d'entrée fournie par une source interne au véhicule, telle qu'une batterie, est apte à générer une tension de sortie de valeur appropriée à l'alimentation du groupe de LEDs. Une LED émet de la lumière lorsqu'une tension d'au moins une valeur seuil, appelée tension directe, est appliquée à ses bornes. L'intensité du flux lumineux émis par une LED augmente en général avec l'intensité moyenne du courant électrique qui la traverse, au-delà de la valeur seuil du courant direct. Cependant, lorsqu'un courant d'une intensité au-delà d'une valeur seuil donnée traverse la LED, la jonction semi-conductrice de cette dernière risque d'être fortement endommagée de manière permanente.

Des convertisseurs connus comprennent des convertisseurs de type SEPIC (de l'anglais « Single-Ended Primary Inductor Converter »), Flyback, élévateur de tension (« boost ») ou abaisseur de tension (« buck »). De tels convertisseurs font intervenir un élément interrupteur, tel qu'un transistor, dont l'état est périodiquement commuté entre les valeurs ouvertes et fermées. La fréquence de découpage appliquée à l'interrupteur influence la valeur de la tension de sortie et la valeur moyenne du courant de sortie.

Il est en outre connu de régler l'intensité lumineuse des sources lumineuses alimentées ainsi, en appliquant un signal de modulation de largeur d'impulsion PWM (« pulse width modulation ») ayant un rapport cyclique et un courant de crête donnés, au convertisseur à découpage. La fréquence du signal de modulation de largeur d'impulsion a un impact sur le rapport cyclique. En adaptant la fréquence du signal de modulation de largeur d'impulsion, une intensité de courant moyenne prédéterminée peut ainsi être obtenue au niveau du convertisseur. Ceci implique, au niveau des sources lumineuses alimentées, qu'un flux lumineux d'une intensité correspondante à l'intensité moyenne du courant qui les traverse est émis. Plus l'intensité moyenne du courant qui traverse les sources lumineuses est importante, plus l'intensité du flux lumineux émis par les sources lumineuses est importante. Comme la fréquence d'un signal PWM est généralement élevée, le flux lumineux émis sera pulsé à cette même fréquence, et les pulsations ne sont pas perceptibles par l'œil humain. Le système visuel humain se distingue par une perception de type intégrale et perçoit, par rapport à un flux lumineux constant et non-pulsé, un flux d'une intensité lumineuse constante mais réduite.

Dans le contexte des systèmes visant la sécurité routière, il a été proposé d'utiliser un projecteur de véhicule automobile à flux lumineux pulsé, le flux étant commandé par un signal de type PWM. Le conducteur du véhicule est porteur de lunettes comprenant des obturateurs qui sont également commandés par le même signal PWM, de manière synchrone par rapport au projecteur. A la fréquence du signal PWM, les lunettes passent d'un état transparent à un état opaque, ou de transparence réduite. Comme la fréquence d'obturation est synchronisée à la fréquence de pulsation du flux lumineux émis par le projecteur du véhicule du conducteur, les lunettes n'ont pas d'effet sur la perception du flux émis par le projecteur. Le chauffeur perçoit la route devant lui comme étant parfaitement illuminée par le projecteur pulsé. Cependant, les flux lumineux émis par le trafic croisant en sens opposé sur la route ne sont pas synchronisés par rapport à la fréquence d'obturation des lunettes portées par le chauffeur, et ceci avec une probabilité proche de 1. Les obturateurs des lunettes ne laissent donc pas passer au moins une partie des flux lumineux qui sont dirigés vers l'œil du conducteur. Ainsi, les lunettes à obturateurs pulsés réduisent l'intensité perçue des projecteurs des autres véhicules automobiles, ce qui décroit le risque d'éblouissement du conducteur, augmentant de manière générale la sécurité.

Dans une telle application, le courant de crête utilisé pour alimenter les LEDs du projecteur est nécessairement élevé pour assurer un flux lumineux d'une intensité élevée. En effet, le flux doit nécessairement être pulsé dans tous les cas. Lorsqu'un court-circuit ou une variation de rapport cyclique intervient au niveau du signal de commande PWM, il se peut donc que le courant de crête vienne alimenter les LEDs pendant un laps de temps prolongé, menant à l'endommagement des LEDs.

Le document AT517324A1 divulgue un procédé et un module selon les préambules respectifs des revendications 1 et 9. L'invention a pour objectif de pallier au moins un des problèmes posés par l'art antérieur. Plus précisément, l'invention a pour objectif de proposer un procédé et un module de commande de sources lumineuses d'un véhicule automobile, qui diminuent le risque d'endommagement des sources lumineuses lorsque des variations intempestives sont présentes au niveau du signal de commande du dispositif de pilotage de l'alimentation électrique des sources lumineuses.

L'invention a pour objet un procédé de commande d'au moins une source lumineuse d'un véhicule automobile. Le procédé est remarquable en ce qu'il comprend les étapes suivantes :
a) mettre à disposition une consigne de flux lumineux à émettre par la ou les sources lumineuses au niveau d'une unité de commande d'un module de commande de la ou des sources lumineuses ;
b) recevoir, au niveau de l'unité de commande, un premier signal de commande, ledit premier signal étant destiné à commander un dispositif de pilotage de l'alimentation électrique de la ou des sources lumineuses;
c) vérifier, au niveau de l'unité de commande, l'aptitude du premier signal de commande à commander le dispositif de pilotage de sorte à respecter la consigne de flux lumineux ;
d) si le premier signal de commande ne présente pas cette aptitude, générer, au niveau de l'unité de commande, un deuxième signal de commande, ledit deuxième signal étant destiné à commander le dispositif de pilotage de l'alimentation électrique en remplacement dudit premier signal.

Selon un mode avantageux de l'invention, le premier signal de commande est périodique d'une première fréquence et/ou le deuxième signal de commande est périodique d'une deuxième fréquence. La deuxième fréquence est avantageusement égale à la première fréquence. Alternativement, le premier et/ou le deuxième signal de commande peut être non-périodique.

Avantageusement le premier signal de commande et/ou le deuxième signal de commande est à allure carrée.

La consigne de flux lumineux peut être remplacée ou complémentée par une consigne de courant électrique indiquant une valeur d'intensité moyenne.

La consigne de flux lumineux peut de préférence comprendre une intensité lumineuse.

Le procédé peut de préférence comprendre l'étape suivante :
e) si le premier signal de commande présente l'aptitude recherchée, utilisation dudit premier signal pour commander le dispositif de pilotage de l'alimentation électrique.

Les fronts montants du deuxième signal de commande peuvent de préférence être synchronisés dans le temps aves les fronts montants du premier signal de commande. On entend par « synchronisés » que les fronts montants des premier et deuxième signaux sont, soit parfaitement synchrones, soit présentent un décalage entre eux constant.

Lors de l'étape c), une consigne de courant constante peut préférentiellement être déterminée par l'unité centrale en déterminant l'intensité de courant électrique moyenne nécessaire à la réalisation de la consigne de flux lumineux ; le premier signal de commande peut de préférence être apte à la réalisation de la consigne si son rapport cyclique et le courant de crête qui serait généré par le dispositif de pilotage en le commandant moyennant ledit premier signal, permettent de fournir un courant d'intensité moyenne égale à ladite consigne de courant.

De manière préférée, le deuxième signal de commande peut présenter un rapport cyclique différent du premier signal de commande.

De préférence, le dispositif de pilotage commandé par le deuxième signal de commande peut produire un courant de crête qui est différent du courant de crête qu'il produirait en étant commandé par le premier signal de commande.

Les étapes a) et d) du procédé peuvent de préférence être temporellement décalées d'au moins une période des deux signaux.

De préférence, la première fréquence peut être une fréquence prédéterminée.

Alternativement, la première fréquence peut être déterminée par l'unité centrale.

L'invention a également pour objet un module de commande d'au moins une source lumineuse d'un véhicule automobile. Le module comprend un dispositif de pilotage de l'alimentation électrique de la ou des sources lumineuses et une unité de commande. Le module est remarquable en ce que l'unité de commande comprend :
- des moyens de réception d'un premier signal de commande,
- un élément de mémoire pour le stockage d'une consigne de flux lumineux à émettre par la ou les sources lumineuses, ou d'une consigne de courant ;
- des moyens de traitement de données configurés pour vérifier l'aptitude du premier signal de commande à commander le dispositif de pilotage de sorte à respecter la consigne de flux lumineux ;
- des moyens de génération configurés pour générer, si le premier signal de commande ne présente pas cette aptitude, un deuxième signal de commande, ledit deuxième signal étant destiné à commander le dispositif de pilotage de l'alimentation électrique en remplacement dudit premier signal.

Les moyens de traitement de données de l'unité centrale peuvent préférentiellement être configurés de manière à mettre en œuvre le procédé conforme à l'invention.

De préférence, les moyens de traitement peuvent comprendre un élément microcontrôleur.

Finalement, l'invention a également pour objet un système d'éclairage pour véhicule automobile. Le système d'éclairage est remarquable en ce qu'il comprend
- au moins une source lumineuse ;
- un écran qui comprend des moyens de réception d'un signal de commande et des moyens d'obturation optiques commandés par un signal de commande reçu ;
- un dispositif de génération d'un premier signal de commande, et
- un module de commande conforme à l'invention.
Le dispositif de génération est configuré pour transmettre le premier signal de commande de manière synchronisée par un premier canal de transmission de données à l'écran et par un deuxième canal de transmission de données au module de commande.

L'écran peut être monté sur une paire de lunette, un pare-brise, un pare-soleil, et/ou une visière d'un casque.

Le premier canal de transmission de données peut préférentiellement être un canal non-filaire.

De manière préférée, le deuxième canal de transmission de données peut être un canal filaire.

La ou les sources lumineuses peuvent de préférence comprendre des sources à élément semi-conducteur électroluminescent. Il s'agit par exemple de diodes électroluminescentes, LED, ou de diodes laser.

En utilisant les mesures selon l'invention, il devient possible de proposer une procédé et module de commande de sources lumineuses, par exemple de type LED, qui soit robuste par rapport à des variations intempestives au niveau du signal de commande du dispositif de pilotage de l'alimentation électrique des LEDs. L'utilisation d'un module de commande qui agit comme filtre intelligent permet de détecter des signaux de commande qui induiraient un courant d'alimentation d'une intensité trop élevée au niveau des LEDs, l'intensité étant telle que les LEDs en seraient endommagées. Le module de commande modifie ou corrige un tel signal de commande pour protéger les LEDs. En même temps, le signal de commande modifié ou de remplacement a la même fréquence que le signal de commande d'origine, et il est de préférence synchronisé avec ce dernier. Cette configuration rend la solution d'autant plus intéressante pour une application dans un système lumineux dans lequel le signal d'origine est également utilisé pour commander des lunettes à obturateurs. Un tel système ne peut en effet fonctionner correctement que si les signaux de commandes respectifs des obturateurs (i.e., le signal d'origine) et des sources lumineuses (i.e., le signal modifié par le module de commande) ont des fréquences égales.

D'autres caractéristiques et avantages de la présente invention seront mieux compris à l'aide de la description exemplaire et des dessins parmi lesquels :
- la figure 1 montre de manière schématique une architecture d'alimentation d'une source lumineuse de type LED, connue de l'art antérieur ;
- la figure 2 montre l'évolution d'un signal de commande et de l'intensité du courant électrique fourni à une source lumineuse de type LED, dans une architecture connue de l'art antérieur et telle qu'illustrée par la figure 1 ;
- la figure 3 montre l'évolution d'un signal de commande et de l'intensité du courant électrique fourni à une source lumineuse de type LED, dans une architecture connue de l'art antérieur et telle qu'illustrée par la figure 1 ;
- la figure 4 est une illustration schématique d'un module de commande selon un mode de réalisation préféré de l'invention ;
- la figure 5 montre l'évolution d'un signal de commande et de l'intensité du courant électrique fourni à une source lumineuse de type LED, dans une architecture faisant intervenir un procédé et module de commande selon un mode de réalisation préféré de l'invention;
- la figure 6 montre l'évolution d'un signal de commande et de l'intensité du courant électrique fourni à une source lumineuse de type LED, dans une architecture faisant intervenir un procédé et module de commande selon un mode de réalisation préféré de l'invention;
- la figure 7 montre l'évolution d'un signal de commande et de l'intensité du courant électrique fourni à une source lumineuse de type LED, dans une architecture faisant intervenir un procédé et module de commande selon un mode de réalisation préféré de l'invention;
- la figure 8 est une illustration schématique d'un système d'éclairage pour véhicule automobile selon un mode de réalisation préféré de l'invention.

Sauf indication spécifique du contraire, des caractéristiques techniques décrites en détail pour un mode de réalisation donné peuvent être combinées aux caractéristiques techniques décrites dans le contexte d'autres modes de réalisation décrits à titre exemplaire et non limitatif.

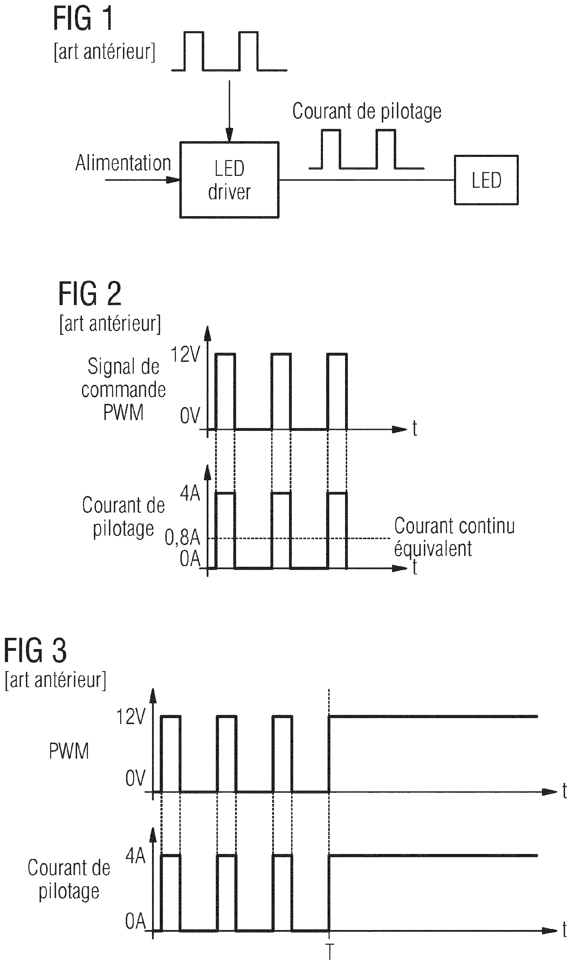

La figure 1 montre une architecture connue pour piloter l'alimentation électrique d'une ou de plusieurs diodes électroluminescentes, LED. Un dispositif de pilotage de l'alimentation électrique est indiqué par le bloc « LED driver ». Ce dispositif est apte à convertir une tension continue d'entrée V_{IN}, fournie en général par une source interne au véhicule automobile équipée du dispositif, en une tension de charge qui est adaptée à l'alimentation des LEDs. Le fonctionnement d'un tel dispositif de pilotage de l'alimentation électrique ne sera pas décrit en détails dans le cadre de la présente invention, puisqu'il est en soi connu dans l'état de l'art. Ainsi, le dispositif fait intervenir au moins un circuit de conversion de type abaisseur de tension (« buck »), élévateur de tension (« boost ») ou de type SEPIC (« Single-Ended Primary Inductance Converter »). En outre, l'intensité moyenne du courant de charge peut être influencée de manière connue par un signal de modulation de largeur d'impulsion, PWM (« Pulse Width Modulation »). L'intensité moyenne du courant de charge a un impact direct sur l'intensité lumineuse émise par les LEDs alimentée. L'intensité lumineuse émise est croissante avec l'intensité moyenne du courant. La configuration du dispositif de pilotage est en général telle que l'évolution du courant électrique qui alimente les LEDs suit de près l'évolution du signal de commande PWM. Ceci est montré à titre exemplaire sur la figure 2, en rapport avec l'architecture connue de la figure 1. Le courant électrique fourni aux LEDs suit l'allure périodique et carrée du signal de commande PWM, pour résulter en un courant électrique d'intensité moyenne équivalente à 0.8A. Dans l'exemple illustré, ce courant moyen permet d'allumer les LEDs sans présenter un risque d'endommagement pour leur jonction semi-conductrice. Le courant de crête est de 4A. La figure 3 illustre un cas similaire en rapport avec l'architecture connue de la figure 1. Cependant, au temps T, le signal PWM est court-circuité et résulte en un rapport cyclique de 100%. Comme le courant délivré aux LEDs suit le signal PWM, un courant constant d'une intensité égale au courant de crête est fourni de manière continue à partir du temps T. Ce courant de 4A endommage cependant de manière irréversible les jonctions semiconductrices des LEDs.

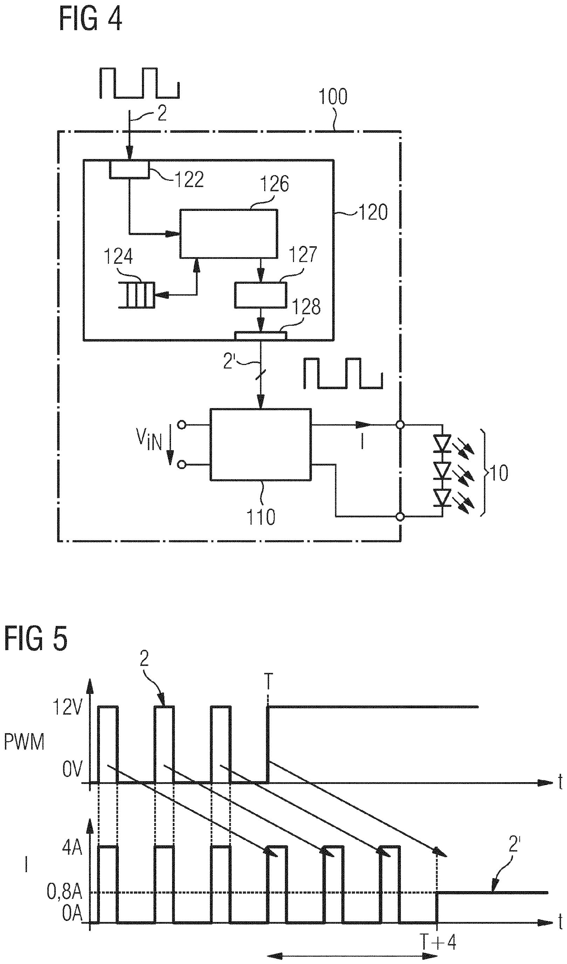

La figure 4 donne une illustration schématique d'un module de commande 100 selon un mode de réalisation préféré de l'invention. En entrée, le module reçoit un signal de commande 2 périodique à allure carrée, et ayant une première fréquence. Il s'agit par exemple d'un signal de modulation de largeur d'impulsion, PWM, caractérisé par une valeur de crête et un rapport cyclique qui déterminent une valeur moyenne sur une période donnée. En sortie, le module fournit un courant électrique d'intensité I à un montage de sources lumineuses 10 d'un véhicule automobile. Dans l'exemple montré, il s'agit de diodes électroluminescentes montées en série. Le signal 2 est reçu par des moyens de réception 122 d'une unité de commande 120 du module. Le module comprend également un élément de mémoire 124 dans lequel une consigne de flux à émettre par les LEDs 10, ou de manière équivalente, une consigne d'intensité de courant électrique moyenne à fournir aux LEDs 10. La consigne peut par exemple être dépendante de la fonction lumineuse qui est à réaliser au sein d'un véhicule automobile. Des moyens de traitement de données 126, réalisés par exemple par un microprocesseur ou une unité programmable, sont configurés pour comparer des propriétés du signal de commande 2 par rapport à la consigne prédéterminée. Les moyens de traitement de données peuvent en outre être configurés à déterminer la fréquence et le rapport cyclique du signal 2, moyennant des outils de traitement du signal en soi connus dans l'état de l'art. Alternativement, ces données peuvent être préenregistrées dans l'élément de mémoire de l'unité de commande 120. Une fois que la fréquence, le rapport cyclique et la valeur de crête du signal 2 sont connus, l'unité de traitement calcule l'intensité de courant moyenne I qui serait fournie par le dispositif de pilotage de l'alimentation 110 aux LEDs 10, si le dispositif de pilotage 110 était commandé directement par le signal PWM 2, de manière analogue au cas connu de la figure 1. Selon les méthodes de calcul, les moyens de traitement 126 utilisent une période ou plusieurs périodes du signal 2 pour déterminer les grandeurs de calcul nécessaires. Si la valeur résultante de l'intensité du courant électrique est apte à satisfaire la consigne prédéterminée, le signal 2 est utilisé sans modifications pour commander le dispositif de pilotage 110.

S'il s'avère cependant que le signal 2 induit un courant I qui ne respecte pas la consigne prédéterminée, et qui est susceptible d'endommager les LEDs 10, les moyens de traitement 126, en utilisant des moyens de génération 127, génèrent un nouveau signal de commande 2', qui représente une version modifiée du signal de commande d'origine 2. Le deuxième signal de commande 2' est avantageusement périodique à allure carrée, et il a avantageusement une fréquence identique à la fréquence du signal de commande d'origine 2. Cependant, le rapport cyclique et/ou la valeur de crête est modifié de sorte à ce que l'intensité du courant électrique I fournie par le dispositif de pilotage 110 aux LEDs 10 après l'application du signal de commande 2', soit conforme à la consigne prédéterminée. En opérant de cette façon, le procédé évite l'endommagement tout en respectant les consignes de flux lumineux et/ou de courant. De manière particulièrement avantageuse, les fronts montants du signal 2' sont synchronisés avec les fronts montants du signal d'origine 2. Des algorithmes de détection de fronts montants sont en soi connus dans l'état de l'art, et peuvent être implémentés en programmant un élément microcontrôleur de manière adaptée. Un tel élément microcontrôleur peut réaliser les fonctions 126 et 127 qui viennent d'être décrites.

La configuration des moyens de traitement 126 de l'unité de commande 120 du module 100 est notamment telle qu'elle peut prendre en charge différents scénarios. Un des scénarios possibles est illustré par l'exemple de la figure 5. Le signal de commande 2, PWM, est court-circuité au temps T. Cette situation est détectée par le module de commande, qui adapte l'intensité moyenne du courant d'alimentation des LEDs à l'instant T+4 de manière à satisfaire une consigne de courant de 0.8A. Contrairement à l'exemple de l'art antérieur à la figure 3, un endommagement des LEDs 10 est ainsi évité. Le délai de quatre périodes pour l'application du signal de commande modifié 2' est donné à titre purement exemplatif et non-limitatif. Dépendant de la performance de calcul des moyens de traitement de données 126 de l'unité de commande 120, ce délai peut être réduit, et l'application du signal de commande 2' peut être envisagée à être réalisée en temps réel. Il est à noter que les fréquences du signal 2 et du signal 2' (qui détermine l'allure du courant I) sont identiques, et que les fronts montants des deux signaux sont temporellement alignés.

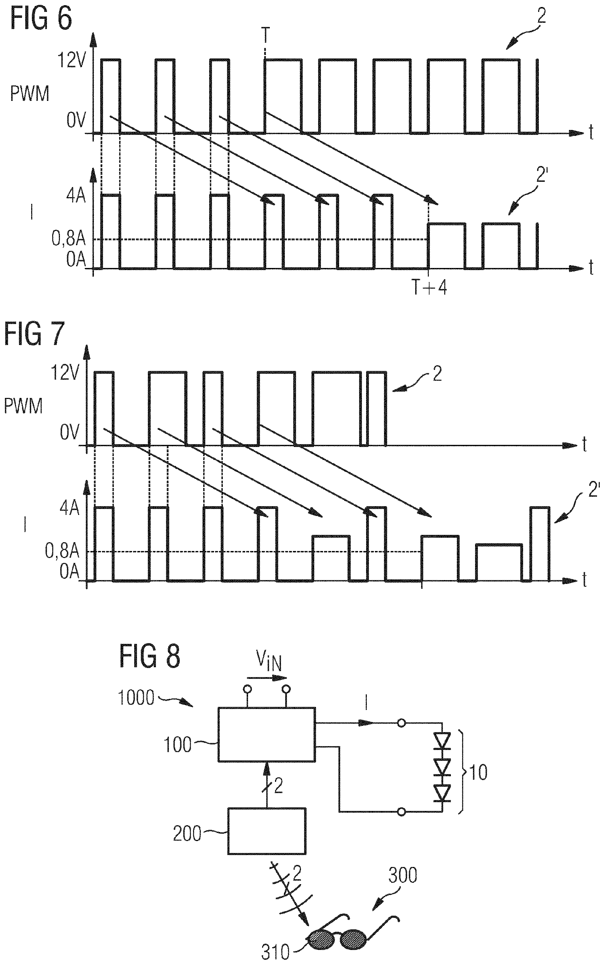

Un autre scénario possible est illustré par l'exemple de la figure 6. Le signal de commande 2, PWM, subit un changement de rapport cyclique à l'instant T. Cette situation est détectée par le module de commande, qui adapte le signal de commande de manière à ce que le courant de crête soit réduit par rapport au nouveau rapport cyclique. Ainsi, le courant d'alimentation des LEDs à l'instant T+4 permet de satisfaire la consigne de courant de 0.8A. Il est à noter que les fréquences du signal 2 et du signal 2' (qui détermine l'allure du courant I) sont avantageusement identiques, et que les fronts montants des deux signaux sont temporellement alignés.

Un autre scénario possible est illustré par l'exemple de la figure 7. Le signal de commande 2, PWM, a une fréquence constante mais son rapport cyclique évolue. Cette situation est détectée par le module de commande, qui adapte le signal de commande de manière à ce que le courant de crête soit réduit par rapport aux rapports cycliques respectifs. Ainsi, le courant d'alimentation des LEDs permet de satisfaire la consigne de courant de 0.8A, ce qui ne serait pas le cas autrement. Il est à noter que les fréquences du signal 2 et du signal 2' (qui détermine l'allure du courant I) sont avantageusement identiques, et que les fronts montants des deux signaux sont temporellement alignés.

La figure 8 montre un cas d'application particulièrement intéressant du module de commande 100 qui vient d'être décrit, sans que l'application de ce dernier ne soit limitée au scénario montré. Un système d'éclairage 1000 comprend un module de commande 100 configuré pour recevoir un signal de commande de type PWM généré par une unité de génération de signaux 200. La transmission du signal 2 de l'unité 200 aux moyens de commande 100 est interne au véhicule automobile équipé du système d'éclairage, et se fait en général par voie filaire. Le module de commande 100 est apte à commander l'intensité du courant électrique I fourni aux sources lumineuses 10, de manière à ce que le courant I soit pulsé à une fréquence égale à la fréquence du signal PWM 2, tout en respectant des consignes de flux lumineux et/ou de courant par rapport aux sources lumineuses. De manière synchrone, l'unité 200 transmet le signal 2 également à un écran 310 disposé par exemple sur une paire de lunettes 300. La transmission se fait de préférence par voie non-filaire puisque la paire de lunette est destinée à être portée par le conducteur du véhicule automobile. A cet effet, l'écran 310 comprend des moyens de réception de données. L'écran 310 comprend également des moyens d'obturation optiques commandés par le signal PWM 2 reçu.

A la fréquence du signal de commande PWM 2, les lunettes passent d'un état transparent à un état opaque, ou de transparence réduite. Comme la fréquence d'obturation est synchronisée à la fréquence de pulsation du flux lumineux émis par les sources lumineuses 10 du projecteur du véhicule, les lunettes n'ont pas d'effet sur la perception du flux émis par le projecteur. Le conducteur perçoit la route devant lui comme étant parfaitement illuminée par le projecteur pulsé. Cependant, les flux lumineux émis par le trafic croisant en sens opposé sur la route ne sont pas synchronisés par rapport à la fréquence d'obturation des lunettes portées par le chauffeur, et ceci avec une probabilité proche de 1. Les obturateurs 310 des lunettes ne laissent donc pas passer au moins une partie des flux lumineux qui sont dirigés vers l'œil du conducteur. Ainsi, les lunettes à obturateurs pulsés réduisent l'intensité perçue des projecteurs des autres véhicules automobiles, ce qui décroit le risque d'éblouissement du conducteur, augmentant de manière générale la sécurité. Par l'utilisation de la présente invention, cette sécurité est garantie tout en augmentant la durabilité des sources lumineuses 10, même si le signal de commande 2 comprend des évènements intempestifs.

## Revendications

1. Procédé de commande d'au moins une source lumineuse (10) d'un véhicule automobile, comprenant l'étape suivante :
a) mettre à disposition une consigne de flux lumineux à émettre par la ou les sources lumineuses (10) au niveau d'une unité de commande (120) d'un module de commande (100) de la ou des sources lumineuses ;
et **caractérisé en ce qu'**il comprend les étapes additionnelles suivantes :
b) recevoir, au niveau de l'unité de commande (120), un premier signal de commande (2) périodique, destiné à commander un dispositif de pilotage (110) de l'alimentation électrique des sources lumineuses;
c) vérifier, au niveau de l'unité de commande (120), l'aptitude du premier signal de commande (2) à commander le dispositif de pilotage (110) de sorte à respecter la consigne de flux lumineux, une consigne de courant constante étant déterminée par l'unité de commande (120) en déterminant l'intensité de courant électrique moyenne nécessaire à la réalisation de la consigne de flux lumineux ; le premier signal de commande (2) étant apte à la réalisation de la consigne de flux lumineux si son rapport cyclique et le courant de crête qui serait généré par le dispositif de pilotage en le commandant moyennant ledit premier signal de commande (2), permettent de fournir un courant d'intensité moyenne égale à ladite consigne de courant constante ;
d) si le premier signal de commande (2) ne présente pas cette aptitude, générer, au niveau de l'unité de commande (110), un deuxième signal de commande (2') périodique, destiné à commander le dispositif de pilotage de l'alimentation électrique en remplacement dudit premier signal de commande (2),
e) si le premier signal de commande (2) présente l'aptitude recherchée, utilisation dudit premier signal de commande (2) pour commander le dispositif de pilotage (110) de l'alimentation électrique.

2. Procédé selon la revendication 1, **caractérisé en ce que** le premier signal de commande (2) est périodique avec une première fréquence et/ou le deuxième signal de commande (2') est périodique avec une deuxième fréquence.

3. Procédé selon l'une des revendications 1 et 2, **caractérisé en ce que** les fronts montants du deuxième signal de commande (2') sont synchronisés dans le temps aves les fronts montants du premier signal de commande (2).

4. Procédé selon une des revendications 1 à 3, **caractérisé en ce que** le deuxième signal de commande (2') présente un rapport cyclique différent du premier signal de commande (2).

5. Procédé selon une des revendication 1 à 4, **caractérisé en ce que** le dispositif de pilotage (110) commandé par le deuxième signal de commande (2') produit un courant de crête qui est différent du courant de crête qu'il produirait en étant commandé par le premier signal de commande (2).

6. Procédé selon une des revendications 1 à 5, **caractérisé en ce que** les étapes a) et d) sont temporellement décalées d'au moins une période des deux signaux (2, 2').

7. Procédé selon une des revendications 1 à 6 et selon la revendication 2, **caractérisé en ce que** la première fréquence est une fréquence prédéterminée.

8. Procédé selon une des revendications 1 à 6 et selon la revendication 2, **caractérisé en ce que** la première fréquence est déterminée par l'unité de commande (120).

9. Module de commande (100) d'au moins une source lumineuse (10) d'un véhicule automobile, comprenant un dispositif de pilotage (110) de l'alimentation électrique des sources lumineuses et une unité de commande (120), **caractérisé en ce que** l'unité de commande comprend :
- des moyens de réception (122) d'un premier signal de commande périodique (2),
- un élément de mémoire (124) pour le stockage d'une consigne de flux lumineux à émettre par la ou les sources lumineuses, ou d'une consigne de courant ;
- des moyens de traitement de données (126) configurés pour vérifier l'aptitude du premier signal de commande (2) à commander le dispositif de pilotage (110) de sorte à respecter la consigne de flux lumineux, une consigne de courant constante est déterminée par l'unité de commande (120) en déterminant l'intensité de courant électrique moyenne nécessaire à la réalisation de la consigne de flux lumineux ; le premier signal de commande (2) étant apte à la réalisation de la consigne de flux lumineux si son rapport cyclique et le courant de crête qui serait généré par le dispositif de pilotage en le commandant moyennant ledit premier signal de commande (2), permettent de fournir un courant d'intensité moyenne égale à ladite consigne de courant constante ;
- des moyens de génération (127) configurés pour générer, si le premier signal de commande (2) ne présente pas cette aptitude, un deuxième signal de commande périodique (2'), ledit deuxième signal étant destiné à commander le dispositif de pilotage (110) de l'alimentation électrique en remplacement dudit premier signal de commande (2), ou si le premier signal de commande (2) présente l'aptitude recherchée, utiliser ledit premier signal de commande (2) pour commander le dispositif de pilotage (110) de l'alimentation électrique.

10. Module selon la revendication 9, **caractérisé en ce que** les moyens de traitement de données (126) de l'unité centrale (120) sont configurés de manière à mettre en œuvre le procédé selon une des revendications 1 à 8.

11. Module selon une des revendications 9 ou 10, **caractérisé en ce que** les moyens de traitement des données (126) comprennent un élément microcontrôleur.

12. Système d'éclairage (1000) pour véhicule automobile **caractérisé en ce qu'**il comprend
- au moins une source lumineuse (10) ;
- un écran (310) qui comprend des moyens de réception d'un signal de commande et des moyens d'obturation optiques commandés par un signal de commande reçu ;
- un dispositif de génération (200) d'un premier signal de commande (2), et
- un module de commande (100) selon une des revendications 9 à 11 ;
dans lequel le dispositif de génération (200) est configuré pour transmettre le premier signal de commande (2) de manière synchronisée par un premier canal de transmission de données à l'écran (310) et par un deuxième canal de transmission de données au module de commande (100).

## Patentansprüche

1. Steuerverfahren für mindestens eine Leuchtquelle (10) eines Kraftfahrzeugs, das den folgenden Schritt beinhaltet:
a) Bereitstellen, durch eine Steuereinheit (120) eines Steuermoduls (100) der Leuchtquelle(n), eines Sollwerts für einen Lichtstrom, der von der oder den Leuchtquellen (10) emittiert werden soll;
und **dadurch gekennzeichnet, dass** es die folgenden zusätzlichen Schritte beinhaltet:
b) Empfangen, durch die Steuereinheit (120), eines ersten periodischen Steuersignals (2), das dazu bestimmt ist, eine Vorrichtung (110) zur Ansteuerung der Stromversorgung der Leuchtquellen zu steuern;
c) Überprüfen, durch die Steuereinheit (120), der Befähigung des ersten Steuersignals (2), die Ansteuervorrichtung (110) so zu steuern, dass der Lichtstromsollwert eingehalten wird, wobei ein konstanter Stromsollwert durch die Steuereinheit (120) bestimmt wird, indem die mittlere Intensität des elektrischen Stroms, die zur Umsetzung des Lichtstromsollwerts notwendig ist, ermittelt wird; wobei das erste Steuersignal (2) zur Umsetzung des Lichtstromsollwerts fähig ist, wenn sein Taktgrad und der Scheitelstrom, der durch die Ansteuervorrichtung per Steuerung durch das erste Steuersignal (2) generiert würde, es gestatten, einen Strom mittlerer Intensität, der gleich dem konstanten Stromsollwert ist, zu liefern;
d) wenn das erste Steuersignal (2) diese Befähigung nicht aufweist, Generieren, durch die Steuereinheit (110), eines zweiten periodischen Steuersignals (2'), das dazu bestimmt ist, die Vorrichtung zur Ansteuerung der Stromversorgung anstelle des ersten Steuersignals (2) zu steuern,
e) wenn das erste Steuersignal (2) die gewünschte Befähigung aufweist, Verwenden des ersten Steuersignals (2), um die Vorrichtung (110) zur Ansteuerung der Stromversorgung zu steuern.

2. Verfahren nach Anspruch 1, **dadurch gekennzeichnet, dass** das erste Steuersignal (2) mit einer ersten Frequenz periodisch ist und/oder das zweite Steuersignal (2') mit einer zweiten Frequenz periodisch ist.

3. Verfahren nach einem der Ansprüche 1 und 2, **dadurch gekennzeichnet, dass** die ansteigenden Flanken des zweiten Steuersignals (2') mit den ansteigenden Flanken des ersten Steuersignals (2) zeitlich synchronisiert sind.

4. Verfahren nach einem der Ansprüche 1 bis 3, **dadurch gekennzeichnet, dass** das zweite Steuersignal (2') einen Taktgrad aufweist, der sich von dem ersten Steuersignal (2) unterscheidet.

5. Verfahren nach einem der Ansprüche 1 bis 4, **dadurch gekennzeichnet, dass** die Ansteuervorrichtung (110), die durch das zweite Steuersignal (2') gesteuert wird, einen Scheitelstrom erzeugt, der sich von dem Scheitelstrom, den sie erzeugen würde, wenn sie durch das erste Steuersignal (2) gesteuert würde, unterscheidet.

6. Verfahren nach einem der Ansprüche 1 bis 5, **dadurch gekennzeichnet, dass** die Schritte a) und d) um mindestens eine Periode der zwei Signale (2, 2') zeitlich versetzt sind.

7. Verfahren nach einem der Ansprüche 1 bis 6 und nach Anspruch 2, **dadurch gekennzeichnet, dass** die erste Frequenz eine vorgegebene Frequenz ist.

8. Verfahren nach einem der Ansprüche 1 bis 6 und nach Anspruch 2, **dadurch gekennzeichnet, dass** die erste Frequenz durch die Steuereinheit (120) bestimmt wird.

9. Steuermodul (100) mindestens einer Leuchtquelle (10) eines Kraftfahrzeugs, beinhaltend eine Vorrichtung (110) zur Ansteuerung der Stromversorgung der Lichtquellen und eine Steuereinheit (120), **dadurch gekennzeichnet, dass** die Steuereinheit Folgendes beinhaltet:
- Mittel (122) zum Empfangen eines ersten periodischen Steuersignals (2),
- ein Speicherelement (124) zum Speichern eines Sollwerts eines Lichtstroms, der durch die Leuchtquelle (n) emittiert werden soll, oder eines Stromsollwerts;
- Datenverarbeitungsmittel (126), die dazu konfiguriert sind, die Befähigung des ersten Steuersignals (2), die Ansteuervorrichtung (110) so zu steuern, dass der Lichtstromsollwert eingehalten wird, zu überprüfen, wobei ein konstanter Stromsollwert durch die Steuereinheit (120) bestimmt wird, indem die mittlere Intensität des elektrischen Stroms, die zur Umsetzung des Lichtstromsollwerts notwendig ist, ermittelt wird; wobei das erste Steuersignal (2) zur Umsetzung des Lichtstromsollwerts fähig ist, wenn sein Taktgrad und der Scheitelstrom, der durch die Ansteuervorrichtung per Steuerung durch das erste Steuersignal (2) generiert würde, es gestatten, einen Strom mittlerer Intensität, der gleich dem konstanten Stromsollwert ist, zu liefern;
- Generierungsmittel (127), die, falls das erste Steuersignal (2) diese Befähigung nicht aufweist, dazu konfiguriert sind, ein zweites periodisches Steuersignal (2') zu generieren, wobei das zweite Signal dazu bestimmt ist, die Vorrichtung (110) zur Ansteuerung der Stromversorgung anstelle des ersten Steuersignals (2) zu steuern, oder die, falls das erste Steuersignal (2) die gewünschte Befähigung aufweist, dazu konfiguriert sind, das erste Steuersignal (2) zu verwenden, um die Vorrichtung (110) zur Ansteuerung der Stromversorgung zu steuern.

10. Modul nach Anspruch 9, **dadurch gekennzeichnet, dass** die Datenverarbeitungsmittel (126) der Zentraleinheit (120) so konfiguriert sind, dass sie das Verfahren nach einem der Ansprüche 1 bis 8 durchführen.

11. Modul nach einem der Ansprüche 9 oder 10, **dadurch gekennzeichnet, dass** die Datenverarbeitungsmittel (126) ein Mikrocontroller-Element beinhalten.

12. Beleuchtungssystem (1000) für ein Kraftfahrzeug, **dadurch gekennzeichnet, dass** es Folgendes beinhaltet:
- mindestens eine Leuchtquelle (10);
- ein Display (310), das Mittel zum Empfangen eines Steuersignals und optische Verschlussmittel, die durch ein empfangenes Steuersignal gesteuert werden, beinhaltet;
- eine Vorrichtung (200) zum Generieren eines ersten Steuersignals (2) und
- ein Steuermodul (100) nach einem der Ansprüche 9 bis 11;
wobei die Generierungsvorrichtung (200) dazu konfiguriert ist, das erste Steuersignal (2) synchronisiert über einen ersten Datenübertragungskanal an das Display (310) und über einen zweiten Datenübertragungskanal an das Steuermodul (100) zu übertragen.

## Claims

1. Control method for at least one light source (10) of a motor vehicle, comprising the following step:
a) the provision of a setpoint for the luminous flux to be emitted by the light source(s) (10), in a control unit (120) of a control module (100) for said light source(s);
and **characterized in that** it comprises the following additional steps:
b) reception, in the control unit (120), of a first periodic control signal (2) which is intended to control a device (110) for the control of the electric power supply to the light sources;
c) verification, in the control unit (120), of the capability of the first control signal (2) to control the control device (110), such that the luminous flux setpoint is observed, a constant current setpoint being established by the control unit (120), by determining the average electric current intensity required to achieve the luminous flux setpoint; the first control signal (2) being appropriate for the achievement of the luminous flux setpoint, if its duty cycle and the peak current which would be generated by the control device upon the execution of control by means of said first control signal (2) will permit the delivery of an average current intensity which is equal to said constant current setpoint;
d) if the control signal (2) does not show this capability, generation, in the control unit (110), of a second periodic control signal (2') which is intended to control the device for the control of the electric power supply, in place of said first control signal (2),
e) if the first control signal (2) shows the desired capability, said first control signal (2) is employed to control the device (110) for the control of the electric power supply.

2. Method according to Claim 1, **characterized in that** the first control signal (2) is periodic, with a first frequency and/or the second control signal (2') is periodic, with a second frequency.

3. Method according to one of Claims 1 and 2, **characterized in that** the rising edges of the second control signal (2') are synchronized in time with the rising edges of the first control signal (2).

4. Method according to one of Claims 1 to 3, **characterized in that** the second control signal (2') shows a duty cycle which is different from that of the first control signal (2).

5. Method according to one of Claims 1 to 4, **characterized in that** the control device (110) controlled by the second control signal (2') generates a peak current which differs from the peak current which would be generated in response to control by the first control signal (2).

6. Method according to one of Claims 1 to 5, **characterized in that** steps a) and d) are temporally offset by at least one period of the two signals (2, 2').

7. Method according to one of Claims 1 to 6, and according to Claim 2, **characterized in that** the first frequency is a predetermined frequency.

8. Method according to one of Claims 1 to 7, and according to Claim 2, **characterized in that** the first frequency is determined by the control unit (120) .

9. Control module (100) of at least one light source (10) of a motor vehicle, comprising a device (110) for the control of the electric power supply to the light sources, and a control unit (120), **characterized in that** the control unit comprises:
- means (122) for the reception of a first periodic control signal (2),
- a memory component (124) for the storage of a setpoint for the luminous flux to be emitted by the light source(s), or of a current setpoint;
- means (126) for the processing of data, which are configured to verify the capability of the first control signal (2) for the control of the control device (110), such that the luminous flux setpoint is observed, a constant current setpoint is established by the control unit (120), by determining the average electric current intensity required to achieve the luminous flux setpoint; the first control signal (2) being appropriate for the achievement of the luminous flux setpoint, if its duty cycle and the peak current which would be generated by the control device upon the execution of control by means of said first control signal (2) will permit the delivery of an average current intensity which is equal to said constant current setpoint;
- generation means (127) which are configured to generate, if the first control signal (2) does not show this capability, a second periodic control signal (2'), said second signal being intended to control the device (110) for the control of the electric power supply, in place of said first control signal (2), or if the first control signal (2) shows the desired capability, said first control signal (2) is employed to control the device (110) for the control of the electric power supply.

10. Module according to Claim 9, **characterized in that** the data processing means (126) of the central unit (120) are configured for the deployment of the method according to one of Claims 1 to 8.

11. Module according to one of Claims 9 and 10, **characterized in that** the data processing means (126) comprise a microcontroller element.

12. Lighting system (1000) for a motor vehicle, **characterized in that** it comprises
- at least one light source (10);
- a screen (310) incorporating means for the reception of a control signal, and optical obturation means which are controlled by a control signal thus received;
- a device (200) for the generation of a first control signal (2), and
- a control module (100) according to one of Claims 9 to 11;
wherein the generation device (200) is configured to transmit the first control signal (2) in a synchronized manner to the screen (310) via a first data transmission channel, and to the control module (100) via a second data transmission channel.
